# EUROPÄISCHE PATENTSCHRIFT

(11) **EP 3 297 053 B1**
(45) Veröffentlichungstag und Bekanntmachung des Hinweises auf die Patenterteilung: **07.11.2018**
(21) Anmeldenummer: 16189534.7
(22) Anmeldetag: 19.09.2016
(51) Int. Cl.: H01M 2/02, H01M 2/12, H01M 4/04, H01M 12/06, C25B 15/02, C25B 1/04, C25B 9/08, C25B 1/10, C25B 9/04, H01M 4/42, H01M 4/46

(54) **GASERZEUGERZELLE MIT AUSSENLIEGENDER WIDERSTANDSFOLIE**
GAS GENERATOR CELL WITH EXTERNAL RESISTANCE FOIL
CELLULE DE GENERATION DE GAZ COMPRENANT UNE FEUILLE DE RESISTANCE EXTERIEURE

(43) Veröffentlichungstag der Anmeldung: 21.03.2018
(73) Patentinhaber: VARTA Microbattery GmbH, 73479 Ellwangen Jagst (DE)
(72) Erfinder: Kreidler, Bernd, 73479 Ellwangen (DE); Schweinstetter, Bernd, 89561 Dischingen (DE); Voigt, Uwe, 73457 Essingen (DE)
(74) Vertreter: Patentanwaltskanzlei Cartagena

(56) Entgegenhaltungen:
- US-A- 5 486 429
- US-A1- 2013 143 104
- US-A1- 2014 056 327

## Beschreibung

Die vorliegende Erfindung betrifft eine elektrochemische Zelle zur Erzeugung von Wasserstoff, die im Folgenden auch kurz als Wasserstoffentwicklungszelle bezeichnet wird.

Elektrochemische Zellen zur Erzeugung von Wasserstoff sind in diversen Bauformen bekannt. Insbesondere werden solche Zellen häufig als Knopfzellen konstruiert. Ein beispielhafter Aufbau solcher Zellen ist in der DE 3532335 A1 beschrieben.

Die Erzeugung von Wasserstoff basiert bei Zellen wie den in der DE 3532335 A1 beschriebenen auf einer elektrochemischen Reaktion. Beim Durchfluss eines Stroms durch eine Zelle, die als Anode ein Metall wie Zink, also eine elektrochemisch oxidierbare Substanz, und als Kathode eine zur Zersetzung von Wasser befähigte Katalysatorelektrode umfasst, kommt es zur Bildung von Wasserstoff. Als Elektrolyt enthalten solche Zelltypen einen wässrigen alkalischen Elektrolyten.

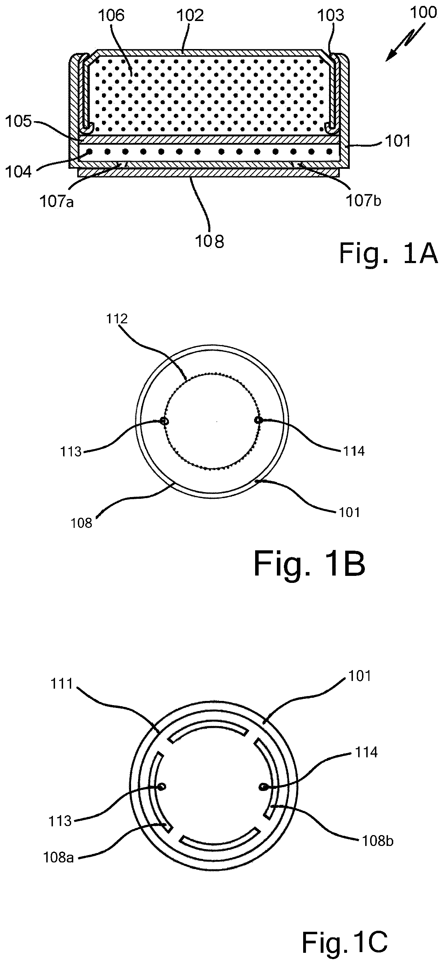

Die bekannten Wasserstoffentwicklungszellen umfassen stets ein Gehäuse, das als Gasaustrittsöffnung mindestens eine Durchbrechung aufweist, durch welche erzeugter Wasserstoff aus dem Inneren des Gehäuses entweichen kann. Die Durchbrechung ist für den Betrieb der Zellen zwingend erforderlich, bei längerer Lagerung können Stoffe wie Kohlendioxid oder Luftsauerstoff ins Gehäuseinnere eindringen und dort zu unerwünschten chemischen Reaktionen führen. Aus diesem Grund ist die mindestens eine Durchbrechung in aller Regel mit einem ablösbaren Aufkleber in Form eines Etiketts mit einer kleinen Grifflasche abgedeckt. Derlei geschützte Zellen sind beispielsweise in Fig. 1 der EP 1325876 B1 dargestellt. Vor Inbetriebnahme der Zellen muss dieser ablösbare Aufkleber bei vielen Anwendungen allerdings entfernt werden. In der Zelle erzeugter Wasserstoff soll nämlich möglichst problemlos aus dem Gehäuseinneren austreten können. Dies ist nicht nur für den ordnungsgemäßen Betrieb der Zellen zweckmäßig sondern kann aus Sicherheitsgründen sogar erforderlich sein. Bei den aus der DE 3532335 A1 bekannten Wasserstoffentwicklungszellen können sich bei einer unbeabsichtigten Blockade der Gasausaustrittsöffnung Drücke bilden, die groß genug sind, um die Zellen platzen zu lassen.

Es gibt zahlreiche Anwendungen für Wasserstoffentwicklungszellen wie die in der DE 3532335 A1 beschriebenen. Sehr häufig werden sie im Zusammenhang mit dem Austrag von fließfähigen Medien eingesetzt. So kann der erzeugte Wasserstoff z.B. den Kolben eines Fettspenders antreiben, wie das in der DE 3532335 A1 beschrieben ist. Aus der EP 2674623 A1 ist die Verwendung von Wasserstoff erzeugenden Zellen zum Austrag von Desinfektionsmitteln und von Duftstoffen aus Duftspendern bekannt.

Bei Wasserstoffentwicklungszellen wie den in der DE 3532335 A1 beschriebenen Zellen mit Zinkanode läuft die Wasserstoffentwicklung in der Regel freiwillig ab, wenn die Anode elektrisch mit der Kathode verbunden wird. Zur Einstellung der Wasserstoffentwicklungsrate wird ein Lastwiderstand zwischen die Anode und die Kathode geschaltet. Dieser Lastwiderstand ist in der Regel immer ein Teil einer größeren Vorrichtung wie z.B. den genannten Duftspendern. Die Wasserstoffentwicklungszelle wird in diese eingesetzt. Im Betrieb kommt es dann zu einer im Wesentlichen konstanten Wasserstoffentwicklung. Eine nachträgliche Anpassung der Wasserstoffentwicklungsrate ist nur sehr aufwendig möglich. Es bedarf hierzu eines Austauschs oder einer Anpassung des Lastwiderstands.

Der vorliegenden Erfindung lag die Aufgabe zugrunde, eine technische Lösung zur Bereitstellung von Wasserstoff bereitzustellen, die es erlaubt, die Wasserstoffentwicklungsrate in bestehenden Vorrichtungen wie den genannten Duftspendern nachträglich anzupassen, ohne dass hierfür ein in die Vorrichtungen integrierter Lastwiderstand angepasst oder ausgetauscht werden muss.

Diese Aufgabe wird gelöst durch die elektrochemische Zelle mit den Merkmalen des Anspruchs 1. Bevorzugte Ausführungsformen der erfindungsgemäßen Zelle sind in den abhängigen Ansprüche 2 bis 9 angegeben. Der Wortlaut sämtlicher Ansprüche wird hiermit zum Inhalt der vorliegenden Beschreibung gemacht.

Die erfindungsgemäße Zelle dient zur Erzeugung von Wasserstoff. Sie weist sie eine Anode umfassend eine elektrochemisch oxidierbare Substanz (beispielsweise Zink oder Magnesium oder eine Legierung dieser Metalle) und eine zur Wasserstoff-Erzeugung ausgebildete Elektrode als Kathode (beispielsweise eine der in der DE 3532335 A1 beschriebenen Katalysatorelektroden) auf. Die Katalysatorelektroden sind hierbei bevorzugt als Gasdiffusionselektroden ausgebildet mit einer dünnen Aktivschicht, in die ein geeigneter Katalysator eingebettet ist. Auf den diesbezüglichen Inhalt der DE 3532335 A1 wird hiermit Bezug genommen.

Als Elektrolyt enthält die elektrochemische Zelle bevorzugt einen wässrigen alkalischen Elektrolyten, beispielsweise Kalilauge.

Bei der erfindungsgemäßen Zelle läuft die Wasserstoffentwicklung freiwillig ab, wenn die Anode elektrisch mit der Kathode verbunden wird. Zu diesem Zweck sind die Anode und die Kathode derart ausgebildet, dass die Wasserstofferzeugung an der Kathode einsetzt, sobald die Anode und die Kathode elektrisch miteinander verbunden werden.

Die erfindungsgemäße Zelle umfasst weiterhin ein Gehäuse, das einen Innenraum umschließt, in dem die Anode und die Kathode - voneinander getrennt durch einen Separator - angeordnet sind. Dieses Gehäuse weist eine Durchbrechung auf, durch welche an der zur Wasserstoff-Erzeugung ausgebildeten Elektrode erzeugter Wasserstoff aus dem Innenraum entweichen kann.

Besonders zeichnet sich die erfindungsgemäße Zelle dadurch aus, dass auf mindestens eine Außenseite des Gehäuses mindestens eine Widerstandsfolie aufgeklebt ist, die bei einem Betrieb der Zelle als Lastwiderstand zwischen Anode und Kathode geschaltet ist und den Stromfluss zwischen der Anode und der Kathode, und damit auch die Gaserzeugungsrate, herabsetzt.

Dies erlaubt es, die Wasserstoffentwicklungsrate in Vorrichtungen wie den eingangs genannten Duftspendern nachträglich anzupassen, ohne dass hierfür ein in die Vorrichtungen integrierter Lastwiderstand angepasst oder ausgetauscht werden muss. Stattdessen ist es lediglich erforderlich, die Wasserstoffentwicklungszelle in diesen Vorrichtungen durch eine erfindungsgemäße Zelle zu ersetzen, wobei die Widerstandsfolie so platziert sein sollte, dass sie bei einem Betrieb der Zelle in Serie zu einem der integrierten Lastwiderstände geschaltet ist. Mittels der mindestens einen Widerstandsfolie kann die Gaserzeugungsrate auf einen gewünschten Wert herabgesetzt werden.

Die Widerstandsfolie wird bevorzugt so gewählt, dass die Gaserzeugungsrate um mindestens 1 % und um maximal 99 %, besonders bevorzugt um mindestens 10 % und um maximal 90 %, abgesenkt wird.

Besonders bevorzugt weist die Widerstandsfolie einer erfindungsgemäßen Zelle einen Flächenwiderstand im Bereich von 1 mΩ/□ bis 100 kΩ/□, bevorzugt im Bereich von 1 mΩ/□ bis 50 kΩ/□, besonders bevorzugt im Bereich von 5 mΩ/□ bis 50 kΩ/□, insbesondere im Bereich von 5 mΩ/□ bis 100 Ω/□.

Im Rahmen der Erfindung einsetzbare Widerstandsfolien umfassen in bevorzugten Ausführungsformen mindestens eine der folgenden Komponenten:
- mindestens eine Metallschicht,
- mindestens eine Widerstandsschicht und
- mindestens eine Klebstoffschicht.

In besonders bevorzugten Ausführungsformen weist die Widerstandsfolie eine der folgenden Schichtabfolgen auf:
- Metallschicht / Klebstoffschicht
- Klebstoffschicht / Metallschicht / Klebstoffschicht
- Metallschicht / Widerstandsschicht / Metallschicht
- Klebstoffschicht / Metallschicht / Widerstandsschicht / Metallschicht
- Klebstoffschicht / Metallschicht / Widerstandsschicht / Metallschicht / Klebstoffschicht

Die Metallschicht besteht bevorzugt aus Kupfer, aus Aluminium, aus Nickel, aus Kobalt, aus Edelmetallen wie Gold, Silber und Platin oder aus einer Legierung eines dieser Metalle.

Die Widerstandsschicht basiert beispielsweise auf einem Polymer mit definierter elektrischer Leitfähigkeit, einer Widerstandslegierung oder einem kohlenstoffbasierten Material.

Die Klebstoffschicht ist bevorzugt aus einem Acrylatkleber oder aus einem Epoxidkleber gebildet.

In einigen besonders bevorzugten Ausführungsformen werden Klebstoffschichten verwendet, die selbst eine begrenzte elektrische Leitfähigkeit aufweisen und die die Funktion einer Widerstandsschicht übernehmen können. Zur Herstellung solcher Klebstoffschichten können einem Klebstoff beispielsweise elektrisch leitende Partikel oder Polymerbestandteile zugesetzt werden. Geeignet sind beispielsweise Silberpartikel, Nickelpartikel, Kobaltpartikel, Messingpartikel oder Bronzepartikel.

Eine Widerstandsfolie mit der Sequenz Klebstoffschicht / Metallschicht / Klebstoffschicht lässt sich, wenn beide Klebstoffschichten leitfähig ausgebildet sind, auf mindestens eine Außenseite des Gehäuses einer erfindungsgemäßen Zelle aufkleben. Eine weitere Klebstoffschicht steht dann zur Verfügung, um die Zelle beispielsweise mit einem elektrischen Kontakt oder einem elektronischen Bauelement zu verkleben.

Bevorzugt weist die Widerstandsfolie - einschließlich aller ihrer Schichten - eine Dicke im Bereich von 40 µm bis 2000 µm auf. Innerhalb dieses Bereiches ist ein Bereich von 50 µm bis 500 µm, insbesondere von 50 µm bis 250 µm, weiter bevorzugt. Eine Klebstoffschicht innerhalb des Verbundes weist dabei in der Regel eine Dicke zwischen 10 µm und 100 µm auf.

In einer besonders bevorzugten Ausführungsformen ist die erfindungsgemäße Zelle als Knopfzelle ausgebildet und umfasst ein zylindrisches Gehäuse, dessen Außenseite eine flache Oberseite, eine flache Unterseite und eine umlaufende Mantelfläche umfasst. Dabei besteht das Gehäuse bevorzugt aus einem Zellenbecher, einem Zellendeckel und einer Dichtung, wobei der Zellendeckel in den Zellenbecher eingeschoben ist und die Dichtung den Zellenbecher und den Zellendeckel voneinander trennt. In diesem Zustand bildet der Boden des Zellenbechers die flache Unterseite des Gehäuses während der Boden des Zellendeckels die flache Oberseite des Gehäuses bildet.

Es ist bevorzugt, dass die mindestens eine Durchbrechung in den Boden des Zellenbechers oder des Zellendeckels eingebracht ist. Besonders bevorzugt ist sie in den Boden des Zellenbechers eingebracht.

In einer möglichen Weiterbildung umfasst eine als Knopfzelle ausgebildete Zelle gemäß der vorliegenden Erfindung mindestens eine Widerstandsfolie, besonders bevorzugt genau eine Widerstandsfolie, die auf die flache Oberseite ihres Gehäuses aufgeklebt ist.

In einer weiteren möglichen Weiterbildung umfasst eine als Knopfzelle ausgebildete Zelle gemäß der vorliegenden Erfindung mindestens eine Widerstandsfolie, besonders bevorzugt genau eine Widerstandsfolie, die auf die flache Unterseite ihres Gehäuses aufgeklebt ist.

In einer dritten möglichen Weiterbildung umfasst eine als Knopfzelle ausgebildete Zelle gemäß der vorliegenden Erfindung mindestens eine Widerstandsfolie, besonders bevorzugt genau eine Widerstandsfolie, die auf die umlaufende Mantelfläche ihres Gehäuses aufgeklebt ist.

In einer bevorzugten Ausführungsform der erfindungsgemäßen Zelle ist die mindestens eine Durchbrechung im Boden des Zellenbechers mittels der Widerstandsfolie auf der flachen Unterseite des Gehäuses verschlossen. Die Widerstandsfolie deckt dabei die mindestens eine Durchbrechung sowie einen die mindestens eine Durchbrechung umgebenden Bereich der Unterseite ab. Die Widerstandsfolie dient in dieser Ausführungsform also dem gleichen Zweck wie der bereits erwähnte, aus dem Stand der Technik bekannte ablösbare Aufkleber in Form eines Etiketts. Im Unterschied zu diesen Etiketten weist die Widerstandsfolie in bevorzugten Ausführungsformen allerdings
- mindestens eine Sollrissstelle auf, die bei der ersten Inbetriebnahme der Zelle durch einen in Folge der einsetzenden Wasserstofferzeugung im Innenraum sich bildenden Druck aufreißt
   und/oder
- sie weist in dem die Durchbrechung umgebenden Bereich mindestens einen Durchlass in Gestalt eines Loches oder eines Schlitzes auf.

Diese beiden Merkmale bewirken grundsätzlich den gleichen technischen Effekt, sie können daher alternativ zueinander oder aber in Kombination miteinander eingesetzt werden. Sowohl durch eine Widerstandsfolie mit der mindestens einen Sollrissstelle als auch durch eine Widerstandsfolie mit dem mindestens einen Durchlass in Gestalt des Loches oder Schlitzes in dem die Durchbrechung umgebenden Bereich wird die erfindungsgemäße Zelle wirksam vor ihrer Inbetriebnahme vor dem Eindringen von Stoffen wie Kohlendioxid oder Luftsauerstoff geschützt. Die Widerstandsfolie dient daher der Verbesserung der Lagerstabilität. Gleichzeitig gewährleisten die mindestens eine Sollrissstelle und der mindestens eine Durchlass in Gestalt des Loches oder Schlitzes aber auch, dass in der Zelle gebildeter Wasserstoff aus dem Innenraum entweichen kann, ohne dass es zuvor erforderlich ist, die Widerstandsfolie von der Außenseite des Gehäuses abzuziehen.

Bildet sich bei der Inbetriebnahme der Zelle ein Druck im Inneren der Zelle, so führt dieser bei Anwesenheit der Widerstandsfolie mit der mindestens einen Sollrissstelle zu einem Aufreißen der Widerstandsfolie entlang mindestens einer Sollrissstelle. Bei Anwesenheit der Widerstandsfolie mit dem mindestens einen Durchlass kann in der Zelle gebildeter Wasserstoff durch diesen Durchlass aus der Zelle entweichen. In der Regel führt der im Zellinneren entstehende Druck zunächst zu einem leichten Anheben der Widerstandsfolie bis sich Wasserstoff aus dem Zellinneren seinen Weg durch die Durchbrechung hin zu dem mindestens einen Durchlass gebahnt hat. Es ist nämlich in aller Regel bevorzugt, dass die Durchbrechung und der mindestens eine Durchlass nicht überlappen. Eine Überlappung hätte negative Auswirkungen auf die Lagerstabilität der erfindungsgemäßen Zelle. Aus diesem Grund ist der mindestens eine Durchlass in Gestalt eines Loches oder eines Schlitzes auch in dem die Durchbrechung umgebenden Bereich angeordnet.

Besonders bevorzugt deckt die Widerstandsfolie den Boden des Zellenbechers oder des Zellendeckels vollständig oder nahezu vollständig ab.

Zum Begriff "Sollrissstelle": Im Rahmen der vorliegenden Erfindung soll hierunter eine Stelle verstanden werden, an der die Widerstandsfolie einer erfindungsgemäßen Zelle bevorzugt reißt, wenn die Widerstandsfolie einem Druck durch aus der Zelle entweichenden Wasserstoff ausgesetzt wird. Realisiert wird die Sollrissstelle durch gezielte Materialschwächung der Widerstandsfolie an dieser Stelle. Hierzu unten noch mehr.

In bevorzugten Ausführungsformen weist das Gehäuse einer erfindungsgemäßen Zelle mehr als eine Durchbrechung auf. Sofern dies der Fall ist, so ist es gemäß der vorliegenden Erfindung bevorzugt, dass jede der Durchbrechungen mit der Widerstandsfolie mit der mindestens eine Sollrissstelle und/oder dem mindestens einen Durchlass in Gestalt eines Loches oder eines Schlitzes abgedeckt ist.

Besonders bevorzugt weist die Zelle 2 bis 4 Durchbrechungen auf.

Bei der Durchbrechung / den Durchbrechungen handelt es sich in der Regel um einfache Löcher, die durch einen Bohr- oder einen Stanzvorgang oder mittels eines Lasers ins Gehäuse eingebracht wurden. Sie können sowohl eine runde als auch eine eckige Form haben, dies ist im Rahmen der vorliegenden Erfindung unkritisch.

Die Durchbrechung / Durchbrechungen weisen bevorzugt einen minimalen Durchmesser von nicht weniger als 0,1 mm, besonders bevorzugt von nicht weniger als 0,5 mm, vorzugsweise von nicht weniger als 1,0 mm, auf. Es ist weiterhin bevorzugt, dass die Durchbrechung / Durchbrechungen einen Durchmesser von nicht mehr als 1,5 mm, aufweisen.

Wie oben bereits ausgeführt, wird die Sollrissstelle bevorzugt durch gezielte Materialschwächung der Widerstandsfolie realisiert. In bevorzugten Ausführungsformen ist die erfindungsgemäße Zelle weiterhin durch mindestens eines der folgenden Merkmale gekennzeichnet:
- In einer bevorzugten Ausführungsform ist die mindestens eine Sollrissstelle als punkt- oder linienförmige Schwächung der Widerstandsfolie realisiert.
- In einer bevorzugten Ausführungsform ist die Schwächung herbeigeführt durch Perforation entlang einer Schwächungslinie. Unter Perforation entlang einer Schwächungslinie ist hierbei die linienförmige Schwächung mittels Durchlochung der Widerstandsfolie in vorzugsweise regelmäßigen Abständen zu verstehen.

- In einer bevorzugten Ausführungsform kann die Schwächung auch kontinuierlich und frei von Löchern entlang einer Schwächungslinie ausgeführt sein. Alternativ zur Perforation kann eine gezielte Materialschwächung entlang einer Schwächungslinie auch durch eine alternative Vorgehensweise, beispielsweise mittels eines Prägevorgangs entlang einer Linie oder durch gezielte Materialschwächung mittels thermischer oder chemischer Behandlung, beispielsweise mittels eines Lasers oder eines Ätzprozesses, herbeigeführt werden.
- In einer bevorzugten Ausführungsform ist die Sollrissstelle als linienförmige Schwächung der Widerstandsfolie mit bogen- oder kreisförmiger Geometrie realisiert.
- In einer bevorzugten Ausführungsform ist die Sollrissstelle als linienförmige Schwächung der Widerstandsfolie entlang einer oder mehrerer Geraden realisiert.

Wenn die Widerstandsfolie in dem die Durchbrechung umgebenden Bereich den mindestens einen Durchlass in Gestalt eines Loches oder eines Schlitzes aufweist, so ist Folgendes bevorzugt:
- Der mindestens eine Durchlass umfasst mehrere Löcher und/oder Schlitze entlang einer Linie.
- Die Linie ist entlang einer oder mehrerer Geraden oder mit bogen- oder kreisförmiger Geometrie realisiert.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

Fig. 1A zeigt schematisch den Querschnitt einer bevorzugten Ausführungsform einer erfindungsgemäßen elektrochemischen Zelle 100.

Bei der bevorzugten Ausführungsform handelt es sich um eine Knopfzelle. Dargestellt sind der Zellenbecher 101 und der darin eingeschobene Zellendeckel 102, aus denen das Gehäuse der Knopfzelle gebildet ist. Das Gehäuse weist eine zylindrische Form auf. Stirnseitig wird das Gehäuse durch die Böden des Zellenbechers 101 und des Zellendeckels 102 begrenzt, mantelseitig durch die Wand des Zellenbechers 101.

Zwischen dem Zellenbecher 101 und dem Zellendeckel 102 ist die Kunststoffdichtung 103 angeordnet, die den Zellenbecher 101 und den Zellendeckel 102 räumlich und elektrisch voneinander trennt. Die zur Wasserstofferzeugung ausgebildete Katalysatorelektrode 104 ist in der Zelle 100 in Form einer flachen Schicht enthalten. Der flächige Separator 105 liegt unmittelbar auf der Katalysatorelektrode 104 auf. Er trennt die Katalysatorelektrode 104 von der Anode 106. Diese enthält als elektrochemisch oxidierbare Substanz ein Metallpulver, nämlich Zink.

In den Boden des Zellbechers 101 sind die Durchbrechungen 107a und 107b eingearbeitet. Der Boden des Zellenbechers 101 (entsprechend der flachen Unterseite des Gehäuses) ist mit der Folie 108 abgeklebt. Diese deckt die Durchbrechungen 107a und 107b vollständig ab und schützt somit das Innere der Zelle 100 vor einem Eindringen etwa von Kohlendioxid.

Bei der Folie 108 handelt es sich um eine Widerstandsfolie bestehend aus einer Kupferschicht und einer Klebstoffschicht. Die Kupferschicht weist eine Dicke von ca. 35 µm auf. Die Klebstoffschicht weist eine Dicke von ca. 30 µm auf. Sie wurde aus einem Klebstoff auf Acrylatbasis gebildet und weist eine elektrische Leitfähigkeit auf. Der Flächenwiderstand der Widerstandsfolie beträgt 5 mΩ/□.

Wenn die Widerstandsfolie 108 als Lastwiderstand zwischen die Anode 106 und die Kathode 104 geschaltet wird, so setzt dies den Stromfluss zwischen der Anode 106 und der Kathode 104 und damit auch die Gaserzeugungsrate herab.

Fig. 1B zeigt schematisch eine Draufsicht auf den Boden des Zellenbechers 101 der in Fig. 1A dargestellten bevorzugten Ausführungsform einer erfindungsgemäßen elektrochemischen Zelle 100. Hier ist zu erkennen, dass die Folie 108 als Sollrissstelle die perforierte Linie 112 aufweist. Wird die Zelle 100 in Betrieb genommen und lässt man einen Strom durch sie fließen, so wird im Inneren des Gehäuses Wasserstoff gebildet. Durch den in der Folge ansteigenden Druck zerreißt die Folie 108 an mindestens einer der Sollrissstellen 108a und 108b. Danach kann der erzeugte Wasserstoff ungehindert aus der Zelle austreten.

Hervorgehoben sind die punktförmigen Bereiche 113 und 114 der Folie 108. In diesen Bereichen überlappt die Folie 108 mit den Durchbrechungen 107a und 107b.

Fig. 1C illustriert eine Draufsicht auf den Boden eines Zellenbechers 101 einer Zelle, die exakt baugleich zur in Fig. 1 dargestellten Zelle ist, abgesehen von der Folie 108. An Stelle der Folie 108 ist hier eine Folie 111 dargestellt, die an Stelle einer Sollrissstelle die Durchlässe 108a und 108b jeweils in Form von bogenförmig angeordneten Schlitzen aufweist.

Hervorgehoben sind die punktförmigen Bereiche 113 und 114 der Folie 111. In diesen Bereichen überlappt die Folie 111 mit den Durchbrechungen 107a und 107b.

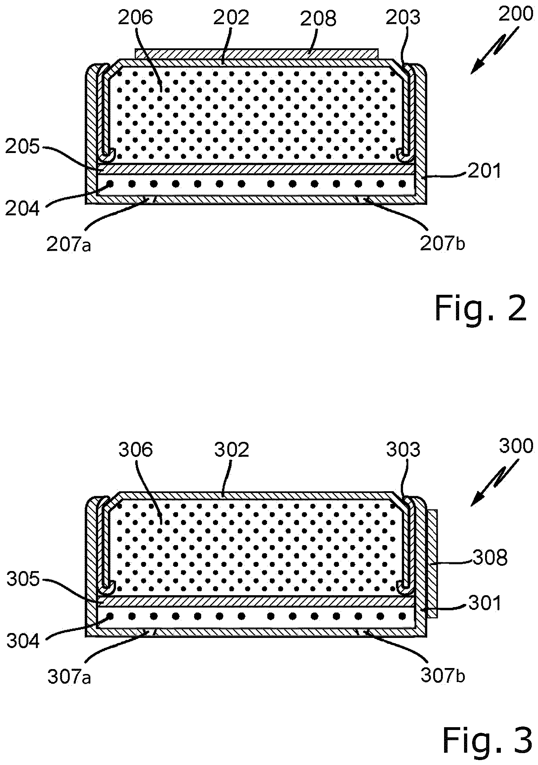

Die in Fig. 2 dargestellte Ausführungsform einer erfindungsgemäßen elektrochemischen Zelle 200 ist im Wesentlichen baugleich zu der in Fig. 1 dargestellten Zelle. Dargestellt sind der Zellenbecher 201, der darin eingeschobene Zellendeckel 202, die Kunststoffdichtung 203, die Katalysatorelektrode 204, der flächige Separator 205, die Anode 206, die Durchbrechungen 207a und 207b und eine Widerstandsfolie 208. Alle diese Zellkomponenten unterscheiden sich nicht von den entsprechenden Komponenten der Zelle 100.

Unterschiede betreffen lediglich die Platzierung der Widerstandsfolie 208. An Stelle der Folie 108 auf dem Boden des Zellenbechers 101 weist die in Fig. 2 dargestellte Zelle die Folie 208 auf der flachen Oberseite des Zellgehäuses (entsprechend dem Boden des Zellendeckels 202) auf.

Die in Fig. 3 dargestellte Ausführungsform einer erfindungsgemäßen elektrochemischen Zelle 300 ist ebenfalls im Wesentlichen baugleich zu der in Fig. 1 dargestellten Zelle. Dargestellt sind der Zellenbecher 301, der darin eingeschobene Zellendeckel 302, die Kunststoffdichtung 303, die Katalysatorelektrode 304, der flächige Separator 305, die Anode 306, die Durchbrechungen 307a und 307b und eine Widerstandsfolie 308. Alle diese Zellkomponenten unterscheiden sich nicht von den entsprechenden Komponenten der Zelle 100.

Unterschiede betreffen lediglich die Platzierung der Widerstandsfolie 308. An Stelle der Folie 108 auf dem Boden des Zellenbechers 101 weist die in Fig. 2 dargestellte Zelle die Folie 308 auf der umlaufende Mantelfläche des Gehäuses der Knopfzelle auf.

## Patentansprüche

1. Elektrochemische Zelle (100; 200; 300) zur Erzeugung von Wasserstoff, mit den Merkmalen
(a) die Zelle weist eine Anode (106; 206; 306) umfassend eine elektrochemisch oxidierbare Substanz sowie eine zur Wasserstoff-Erzeugung ausgebildete Elektrode als Kathode (104; 204; 304) sowie einen wässrigen alkalischen Elektrolyten auf,
(b) die Anode (106; 206; 306) und die Kathode (104; 204; 304) sind derart ausgebildet, dass die Wasserstofferzeugung an der Kathode (104; 204; 304) einsetzt, sobald die Anode (106; 206; 306) und die Kathode (104; 204; 304) elektrisch miteinander verbunden werden,
(c) die Zelle umfasst ein Gehäuse, das einen Innenraum umschließt, in dem die Anode (106; 206; 306) und die Kathode (104; 204; 304) - voneinander getrennt durch einen Separator (105; 205; 305) - angeordnet sind, und
(d) das Gehäuse weist mindestens eine Durchbrechung (107a, 107b; 207a, 207b; 307a, 307b) auf, durch welche an der zur Wasserstoff-Erzeugung ausgebildeten Elektrode (104; 204; 304) erzeugter Wasserstoff aus dem Innenraum entweichen kann,
sowie dem zusätzlichen Merkmal
(e) auf mindestens eine Außenseite des Gehäuses ist mindestens eine Widerstandsfolie (108; 111; 208; 308) aufgeklebt, die bei einem Betrieb der Zelle als Lastwiderstand zwischen Anode (106, 206, 306) und Kathode (104, 204, 304) geschaltet ist und den Stromfluss zwischen der Anode (106, 206, 306) und der Kathode (104, 204, 304), und damit auch die Gaserzeugungsrate, herabsetzt.

2. Zelle nach Anspruch 1 mit mindestens dem folgenden zusätzlichen Merkmal:
(a) Die Widerstandsfolie (108; 111; 208; 308) weist einen Flächenwiderstand im Bereich von 1 mΩ/□ bis 100 kΩ/□ auf.

3. Zelle nach Anspruch 1 oder Anspruch 2 mit mindestens einem der folgenden zusätzlichen Merkmale:
(a) Die Widerstandsfolie (108; 111; 208; 308) umfasst mindestens eine Metallschicht.
(b) Die Widerstandsfolie umfasst mindestens eine Widerstandsschicht.
(c) Die Widerstandsfolie (108; 111; 208; 308) umfasst mindestens eine Klebstoffschicht.
(d) Die Widerstandsfolie (108; 111; 208; 308) weist die folgende Schichtabfolge auf: Metallschicht / Klebstoffschicht.
(e) Die Widerstandsfolie weist die folgende Schichtabfolge auf: Klebstoffschicht / Metallschicht / Klebstoffschicht.
(f) Die Widerstandsfolie weist die folgende Schichtabfolge auf: Metallschicht / Widerstandsschicht / Metallschicht.
(g) Die Widerstandsfolie weist die folgende Schichtabfolge auf: Klebstoffschicht / Metallschicht / Widerstandsschicht / Metallschicht.
(h) Die Widerstandsfolie weist die folgende Schichtabfolge auf: Klebstoffschicht / Metallschicht / Widerstandsschicht / Metallschicht / Klebstoffschicht.

4. Zelle nach Anspruch 3 mit mindestens einem der folgenden zusätzlichen Merkmale:
(a) Die Metallschicht besteht aus Kupfer, aus Aluminium, aus Nickel, aus Kobalt, aus Edelmetallen wie Gold, Silber und Platin oder einer Legierung eines dieser Metalle.
(b) Die Widerstandsschicht basiert auf einem Polymer mit definierter Leitfähigkeit, einer Widerstandslegierung oder einem kohlenstoffbasierten Material.
(c) Die Klebstoffschicht ist bevorzugt aus einem Acrylatkleber oder aus einem Epoxidkleber gebildet.

5. Zelle nach einem der vorhergehenden Ansprüche mit mindestens einem der folgenden zusätzlichen Merkmale:
(a) Die Zelle (100; 200; 300) ist als Knopfzelle ausgebildet und umfasst ein zylindrisches Gehäuse, dessen Außenseite eine flache Oberseite, eine flache Unterseite und eine umlaufende Mantelfläche umfasst.
(b) Das Gehäuse besteht aus einem Zellenbecher (101; 201; 301), einem Zellendeckel (102; 202; 302) und einer Dichtung (103; 203; 303), wobei der Zellendeckel (102; 202; 302) in den Zellenbecher (101; 201; 301) eingeschoben ist und die Dichtung den Zellenbecher (101; 201; 301) und den Zellendeckel (102; 202; 302) voneinander trennt.
(c) Die mindestens eine Durchbrechung (107a, 107b; 207a, 207b; 307a, 307b) ist in den Boden des Zellenbechers (101; 201; 301) oder des Zellendeckels eingebracht.

6. Zelle nach Anspruch 5 mit mindestens einem der folgenden zusätzlichen Merkmale:
(a) Die Zelle (200) ist eine Knopfzelle und sie umfasst mindestens eine Widerstandsfolie (208), die auf die flache Oberseite ihres Gehäuses aufgeklebt ist.
(b) Die Zelle (100) ist eine Knopfzelle und sie umfasst mindestens eine Widerstandsfolie (108), die auf die flache Unterseite ihres Gehäuses aufgeklebt ist.
(c) Die Zelle (300) ist eine Knopfzelle und sie umfasst mindestens eine Widerstandsfolie (308), die auf die umlaufende Mantelfläche ihres Gehäuses der Knopfzelle aufgeklebt ist.

7. Zelle nach Anspruch 6 mit mindestens einem der folgenden zusätzlichen Merkmale:
(a) Die mindestens eine Durchbrechung (107a; 107b) im Boden des Zellenbechers (101) ist mittels der Widerstandsfolie (108) auf der flachen Unterseite des Gehäuses verschlossen.
(b) Die Widerstandsfolie (108) deckt die mindestens eine Durchbrechung (107a; 107b) sowie einen die mindestens eine Durchbrechung 107a; 107b umgebenden Bereich ab.
(c) Die Widerstandsfolie (108) weist mindestens eine Sollrissstelle (112) auf, die bei der ersten Inbetriebnahme der Zelle (100) durch einen in Folge der einsetzenden Wasserstoff- oder Sauerstoff-Erzeugung im Innenraum sich bildenden Druck aufreißt.
(d) Die Widerstandsfolie (111) weist in dem die Durchbrechung (107a; 107b) umgebenden Bereich mindestens einen Durchlass (108a; 108b) in Gestalt eines Loches oder eines Schlitzes auf.

8. Zelle nach Anspruch 7 mit mindestens einem der folgenden zusätzlichen Merkmale:
(a) Die mindestens eine Sollrissstelle (112) ist als punkt- oder linienförmige Schwächung der Widerstandsfolie realisiert.
(b) Die Schwächung ist herbeigeführt durch Perforation entlang einer Schwächungslinie.
(c) Die Schwächung ist kontinuierlich und frei von Löchern entlang einer Schwächungslinie ausgeführt.
(d) Die Sollrissstelle (112) ist als linienförmige Schwächung der Widerstandsfolie mit bogen- oder kreisförmiger Geometrie realisiert.
(e) Die Sollrissstelle ist als linienförmige Schwächung der Widerstandsfolie entlang einer oder mehrerer Geraden realisiert.

9. Zelle nach Anspruch 7 mit mindestens einem der folgenden zusätzlichen Merkmale:
(a) Der mindestens eine Durchlass (108a; 108b) umfasst mehrere Löcher und/oder Schlitze entlang einer Linie.
(b) Die Linie ist entlang einer oder mehrerer Geraden oder mit bogen- oder kreisförmiger Geometrie realisiert.

## Claims

1. Electrochemical cell (100; 200; 300) for generating hydrogen, having the features
(a) the cell has an anode (106; 206; 306) comprising an electrochemically oxidizable substance and also an electrode designed for hydrogen generation as a cathode (104; 204; 304) and also an aqueous alkaline electrolyte,
(b) the anode (106; 206; 306) and the cathode (104; 204; 304) are designed in such a way that the hydrogen generation starts at the cathode (104; 204; 304) as soon as the anode (106; 206; 306) and the cathode (104; 204; 304) are electrically connected to one another,
(c) the cell comprises a housing which encloses an interior in which the anode (106; 206; 306) and the cathode (104; 204; 304) - separated from one another by a separator (105; 205; 305) - are arranged, and
(d) the housing has at least one aperture (107a, 107b; 207a, 207b; 307a, 307b) through which hydrogen which is generated at the electrode (104; 204; 304) which is designed for hydrogen generation can escape from the interior,
and also the additional feature
(e) at least one resistance film (108; 111; 208; 308) is adhesively bonded onto at least one outer side of the housing and, when the cell is operated as a load resistance, is connected between the anode (106; 206; 306) and the cathode (104; 204; 304) and reduces the current flow between the anode (106; 206; 306) and the cathode (104; 204; 304), and therefore also the gas generation rate.

2. Cell according to Claim 1 having at least the following additional feature:
(a) the resistance film (108; 111; 208; 308) has a sheet resistance in the range of from 1 mΩ/□ to 100 kΩ/□.

3. Cell according to Claim 1 or Claim 2 having at least one of the following additional features:
(a) The resistance film (108; 111; 208; 308) comprises at least one metal layer.
(b) The resistance film comprises at least one resistance layer.
(c) The resistance film (108; 111; 208; 308) comprises at least one adhesive layer.
(d) The resistance film (108; 111; 208; 308) has the following layer sequence: metal layer/adhesive layer.
(e) The resistance film has the following layer sequence: adhesive layer/metal layer/adhesive layer.
(f) The resistance film has the following layer sequence: metal layer/resistance layer/metal layer.
(g) The resistance film has the following layer sequence: adhesive layer/metal layer/resistance layer/metal layer.
(h) The resistance film has the following layer sequence: adhesive layer/metal layer/resistance layer/metal layer/adhesive layer.

4. Cell according to Claim 3 having at least one of the following additional features:
(a) The metal layer consists of copper, aluminium, nickel, cobalt, noble metals such as gold, silver and platinum, or an alloy of one of these metals.
(b) The resistance layer is based on a polymer having a defined conductivity, a resistance alloy, or a carbon-based material.
(c) The adhesive layer is preferably formed from an acrylate adhesive or an epoxy adhesive.

5. Cell according to one of the preceding claims having at least one of the following additional features:
(a) The cell (100; 200; 300) is designed as a button cell and comprises a cylindrical housing, the outer side of which comprises a flat top side, a flat bottom side and a circumferential lateral surface.
(b) The housing consists of a cell cup (101; 201; 301), a cell cover (102; 202; 302) and a seal (103; 203; 303), wherein the cell cover (102; 202; 302) is inserted into the cell cup (101; 201; 301) and the seal separates the cell cup (101; 201; 301) and the cell cover (102; 202; 302) from one another.
(c) The at least one aperture (107a, 107b; 207a, 207b; 307a, 307b) is introduced into the bottom of the cell cup (101; 201; 301) or of the cell cover.

6. Cell according to Claim 5 having at least one of the following additional features:
(a) The cell (200) is a button cell and it comprises at least one resistance film (208) which is adhesively bonded onto the flat top side of its housing.
(b) The cell (100) is a button cell and it comprises at least one resistance film (108) which is adhesively bonded onto the flat bottom side of its housing.
(c) The cell (300) is a button cell and it comprises at least one resistance film (308) which is adhesively bonded onto the circumferential lateral surface of its housing of the button cell.

7. Cell according to Claim 6 having at least one of the following additional features:
(a) The at least one aperture (107a; 107b) in the bottom of the cell cup (101) is closed by means of the resistance film (108) on the flat bottom side of the housing.
(b) The resistance film (108) covers the at least one aperture (107a; 107b) and also a region which surrounds the at least one aperture (107a; 107b).
(c) The resistance film (108) has at least one predetermined tearing point (112) which tears open when the cell (100) first starts up due to a pressure which forms in the interior as a result of the hydrogen or oxygen generation beginning.
(d) The resistance film (111) has at least one passage (108a; 108b) in the form of a hole or a slot in the region which surrounds the aperture (107a; 107b).

8. Cell according to Claim 7 having at least one of the following additional features:
(a) The at least one predetermined tearing point (112) is realized as a punctiform or linear weak point of the resistance film.
(b) The weak point is created by perforation along a line of weakness.
(c) The weak point is continuous and free of holes along a line of weakness.
(d) The predetermined tearing point (112) is realized as a linear weak point of the resistance film having an arcuate or circular geometry.
(e) The predetermined tearing point is realized as a linear weak point of the resistance film along one or more straight lines.

9. Cell according to Claim 7 having at least one of the following additional features:
(a) The at least one passage (108a; 108b) comprises a plurality of holes and/or slots along a line.
(b) The line is realized along one or more straight lines having an arcuate or circular geometry.

## Revendications

1. Cellule électrochimique (100; 200; 300) pour la production d'hydrogène, présentant les caractéristiques suivantes:
(a) la cellule présente une anode (106; 206; 306) comprenant une substance électrochimiquement oxydable ainsi qu'une électrode conçue pour la production d'hydrogène sous forme de cathode (104; 204; 304) ainsi qu'un électrolyte alcalin aqueux,
(b) l'anode (106; 206; 306) et la cathode (104; 204; 304) sont conçues de telle manière que la production d'hydrogène à la cathode (104; 204; 304) commence dès que l'anode (106; 206; 306) et la cathode (104; 204; 304) sont reliées électriquement l'une à l'autre,
(c) la cellule comprend un boîtier, qui renferme un espace intérieur, dans lequel l'anode (106; 206; 306) et la cathode (104; 204; 304) - séparées l'une de l'autre par un séparateur (105; 205; 305) - sont disposées, et
(d) le boîtier présente au moins une traversée (107a, 107b; 207a, 207b; 307a, 307b), à travers laquelle de l'hydrogène produit à l'électrode (104; 204; 304) conçue pour la production d'hydrogène peut s'échapper hors de l'espace intérieur,
ainsi qu'avec la caractéristique suivante:
(e) au moins un film de résistance (108; 111; 208; 308) est collé sur au moins un côté extérieur du boîtier, et est connecté lors d'un fonctionnement de la cellule comme résistance de charge entre l'anode (106, 206, 306) et la cathode (104, 204, 304) et réduit le flux de courant entre l'anode (106, 206, 306) et la cathode (104, 204, 304) et de ce fait aussi le débit de production de gaz.

2. Cellule selon la revendication 1 présentant au moins la caractéristique supplémentaire suivante:
(a) le film de résistance (108; 111; 208; 308) présente une résistance par carré dans la plage de 1 mΩ/□ à 100 kΩ/□.

3. Cellule selon la revendication 1 ou la revendication 2, présentant au moins une des caractéristiques supplémentaires suivantes:
(a) le film de résistance (108; 111; 208; 308) comprend au moins une couche de métal.
(b) le film de résistance comprend au moins une couche de résistance.
(c) le film de résistance (108; 111; 208; 308) comprend au moins une couche de colle.
(d) le film de résistance (108; 111; 208; 308) présente la succession de couches suivante: couche de métal/couche de colle.
(e) le film de résistance présente la succession de couches suivante: couche de colle/couche de métal/couche de colle.
(f) le film de résistance présente la succession de couches suivante: couche de métal/couche de résistance/couche de métal.
(g) le film de résistance présente la succession de couches suivante: couche de colle/couche de métal/couche de résistance/couche de métal.
(h) le film de résistance présente la succession de couches suivante: couche de colle/couche de métal/couche de résistance/couche de métal/couche de colle.

4. Cellule selon la revendication 3 présentant au moins une des caractéristiques supplémentaires suivantes:
(a) la couche de métal se compose de cuivre, d'aluminium, de nickel, de cobalt, de métaux nobles comme l'or, l'argent et le platine ou d'un alliage d'un de ces métaux.
(b) la couche de résistance est basée sur un polymère ayant une conductibilité définie, un alliage de résistance ou un matériau à base de carbone.
(c) la couche de colle est de préférence formée d'une colle acrylate ou d'une colle époxyde.

5. Cellule selon l'une quelconque des revendications précédentes présentant au moins une des caractéristiques supplémentaires suivantes:
(a) la cellule (100; 200; 300) est constituée par une pile-bouton et comprend un boîtier cylindrique, dont le côté extérieur comprend un côté supérieur plat, un côté inférieur plat et une surface latérale périphérique.
(b) le boîtier se compose d'un godet de cellule (101; 201; 301), d'un couvercle de cellule (102; 202; 302) et d'un joint d'étanchéité (103; 203; 303), dans laquelle le couvercle de cellule (102; 202; 302) est inséré dans le godet de cellule (101; 201; 301) et le joint d'étanchéité sépare l'un de l'autre le godet de cellule (101; 201; 301) et le couvercle de cellule (102; 202; 302).
(c) ladite au moins une traversée (107a, 107b; 207a, 207b; 307a, 307b) est pratiquée dans le fond du godet de cellule (101; 201; 301) ou du couvercle de cellule.

6. Cellule selon la revendication 5 présentant au moins une des caractéristiques supplémentaires suivantes:
(a) la cellule (200) est une pile-bouton et elle comprend au moins un film de résistance (208), qui est collé sur le côté supérieur plat de son boîtier.
(b) la cellule (100) est une pile-bouton et elle comprend au moins un film de résistance (108) qui est collé sur le côté inférieur plat de son boîtier.
(c) la cellule (300) est une pile-bouton et elle comprend au moins un film de résistance (308), qui est collé sur la surface latérale périphérique de son boîtier de la pile-bouton.

7. Cellule selon la revendication 6 présentant au moins une des caractéristiques supplémentaires suivantes:
(a) ladite au moins une traversée (107a; 107b) dans le fond du godet de cellule (101) est fermée au moyen du film de résistance (108) sur le côté inférieur plat du boîtier.
(b) le film de résistance (108) recouvre ladite au moins une traversée (107a; 107b) ainsi qu'une zone entourant ladite au moins une traversée (107a; 107b).
(c) le film de résistance (108) présente au moins un point de déchirure théorique (112), qui lors de la première mise en service de la cellule (100) se déchire sous la pression s'établissant dans l'espace intérieur à la suite du commencement de la production d'hydrogène et d'oxygène.
(d) le film de résistance (111) présente dans la zone entourant la traversée (107a; 107b) au moins un passage (108a; 108b) sous la forme d'un trou ou d'une fente.

8. Cellule selon la revendication 7 présentant au moins une des caractéristiques supplémentaires suivantes:
(a) ledit au moins un point de déchirure théorique (112) est réalisé sous la forme d'un affaiblissement en forme de point ou de ligne du film de résistance.
(b) l'affaiblissement est pratiqué par perforation le long d'une ligne d'affaiblissement.
(c) l'affaiblissement est réalisé en continu et est exempt de trous le long d'une ligne d'affaiblissement.
(d) le point de déchirure théorique (112) est réalisé sous la forme d'un affaiblissement en forme de ligne du film de résistance avec une géométrie en forme d'arc ou de cercle.
(e) le point de déchirure théorique est réalisé sous la forme d'un affaiblissement en forme de ligne du film de résistance le long d'une ou de plusieurs droite (s) .

9. Cellule selon la revendication 7 présentant au moins une des caractéristiques suivantes:
(a) ledit au moins un passage (108a; 108b) comprend plusieurs trous et/ou fentes le long d'une ligne.
(b) la ligne est réalisée le long d'une ou de plusieurs droite(s) ou avec une géométrie en forme d'arc ou de cercle.
